# EUROPÄISCHE PATENTSCHRIFT

(11) **EP 2 370 305 B1**
(45) Veröffentlichungstag und Bekanntmachung des Hinweises auf die Patenterteilung: **09.01.2013**
(21) Anmeldenummer: 09799564.1
(22) Anmeldetag: 26.11.2009
(51) Int. Cl.: B62D 1/08, B62D 1/04

(54) **LENKRAD FÜR EIN KRAFTFAHRZEUG**
STEERING WHEEL FOR A MOTOR VEHICLE
VOLANT DE DIRECTION POUR VEHICULE A MOTEUR

(30) Priorität: 28.11.2008 DE 102008060184
(43) Veröffentlichungstag der Anmeldung: 05.10.2011
(73) Patentinhaber: Takata AG, 63743 Aschaffenburg (DE)
(72) Erfinder: MÜLLER, Norbert, 63743 Aschaffenburg (DE); KEMPF, Bernhard, 63839 Kleinwallstadt (DE); HANS, Andreas, 63843 Niedernberg (DE); SAUER, Martin, 63768 Hösbach (DE); HARTLAUB, Achim, 63868 Großwallstadt (DE); RUDOLF, Claus, 63808 Haibach (DE); DIENERT, Sebastian, 63110 Rodgau (DE); BROOS, Stephanie, 63741 Aschaffenburg (DE)
(74) Vertreter: Staroske, Sandro
(86) Internationale Anmeldenummer: PCT/EP2009/065934
(87) Internationale Veröffentlichungsnummer: WO 2010/060971

(56) Entgegenhaltungen:
- DE-A1- 19 919 278
- GB-A- 357 614
- JP-A- 62 203 870
- JP-A- 2009 056 837
- US-A1- 2008 115 619

## Beschreibung

Die Erfindung betrifft ein Lenkrad für ein Kraftfahrzeug.

Ein solches Lenkrad weist üblicherweise einen Lenkradkranz auf, der entlang einer Umfangsrichtung geschlossen umlaufen kann, wobei das Lenkkrad über jenen Lenkradkranz betätigt werden kann, um eine Richtungsänderung eines zugeordneten Kraftfahrzeuges herbeizuführen, einen Nabenkörper, über den das Lenkrad um eine Lenkachse drehbar an einem Kraftfahrzeug lagerbar ist, sowie zumindest eine Speiche, über die der Nabenkörper mit dem Lenkradkranz verbunden ist.

Ein Lenkrad ist aus der US 2008/0115619 A1 bekannt. Die Druckschrift beschreibt ein Lenkradskelett mit einem Lenkradkranz, einem Nabenkörper, über den das Lenkradskelett um eine Lenkachse drehbar an einem Kraftfahrzeug lagerbar ist und zumindest einer Speiche, über die der Nabenkörper mit dem Lenkradkranz verbunden ist. Die Zahl und die Lage der Speichen bezüglich des Lenkradkranzes ist veränderbar. Die Speichen können über eine erste und zweite Einführnut mit dem Nabenkörper und über ein hülsenförmiges Element mit dem Lenkradkranz verbunden werden, Dabei werden die Speichenfest mit dem Nabenkörper und dem Lenkradkranz verbunden. Nachteilig ist, dass eine Veränderung der Lage der Speichen nach der Montage nicht ohne eine Demontage möglich ist.

Die GB 357,614 beschreibt ebenfalls ein Lenkrad. Dabei bestehen die Speichen aus einer Hülle und einem Stab und sind teleskopartig ausfahrbar und verschwenkbar um einen Nabenkörper gelagert. Allerdings sind die Speichen zwar drehbar an dem Lenkradkranz gelagert aber in einer bestimmten Position am Lenkradkranz festgelegt. Dadurch wird es ermöglicht, die Position des Lenkrads zu verstellen, um dem Fahrer beispielsweise das Einsteigen zu erleichtern. Nachteilig ist, dass das Verschwenken der Speichen nicht um die Lenkachse entlang des Umfangs des Lenkradkranzes erfolgt, sondern lediglich ein Verschieben des Lenkradkranzes innerhalb der Ebene des Lenkradkranzes möglich ist.

Die DE 199 19 278 A1 beschreib ein Lenkrad bei dem der Lenkradkranz aus mehreren Kranzteilen besteht, wobei ein erstes Kranzteil fest oder radial verschiebbar über Speichen mit einem Nabenkörper verbunden ist und das zweite Kranzteil in Umfangsrichtung verschiebbar an dem ersten Kranzteil gelagert ist. Weiterhin kann der Kranzdurchmesser durch eine Veränderung der Verstellmittel angepasst werden. Die Anpassung des Lenkraddurchmessers und der Kranzdicke kann automatisch anhand eines berechneten Dynamikfaktors erfolgen. Dabei sind die ersten Kranzteile über die Speichen fest mit dem Nabenkörper verbunden. Nachteilig ist, dass eine variable Einstellung der Form des Lenkradkranzes durch die festgelegten Speichen nur in einem geringen Maß möglich ist.

In der JP 62 203870 A ist ein Lenkrad beschrieben, bei dem der Lenkradkranz elastisch flexibel ausgebildet ist und eine Änderung der Form des Lenkradkranzes durch teleskopartige Speichen erfolgt. Nachteilig ist hier ebenfalls, dass eine variable Einstellung der Form des Lenkradkranzes nur in einem geringen Maß möglich ist.

Der Erfindung liegt das Problem zugrunde, ein Lenkrad zu schaffen, das möglichst vielseitig verwendbar ist.

Dieses Problem wird durch ein Lenkrad mit den Merkmalen des Anspruchs 1 gelöst.

Danach ist vorgesehen, dass die mindestens eine Speiche um die Lenkachse (oder eine sonstige Achse) bezüglich des Lenkradkranzes verschwenkbar ausgebildet ist Hierbei wird also durch Verschwenken der Speiche die Speichenstellung der Speiche bezüglich des Lenkradkranzes verändert. Um die mindestens eine Speiche derart verschwenken zu können, ist sie verschwenkbar am Nabenkörper gelagert.

Weiterhin ist in einer Variante der Erfindung die mindestens eine Speiche entlang einer Erstreckungsrichtung (z.B. eine radiale Richtung bezüglich des Lenkrades), entlang der sich die Speiche erstreckt, verstellbar ausgebildet, so dass die Länge der Speiche entlang der Erstreckungsrichtung variabel ist. Hierbei kann die Speiche als eine Teleskopspeiche ausgebildet sein. D.h. die Speiche weist zumindest zwei Elemente auf, die aufeinander oder aneinander entlang gleiten können, so dass die beiden Elemente zusammengenommen einen Körper variabler Gesamtlänge bilden.

Vorzugsweise weist die Speiche an einem freien Ende ein hülsenförmiges Element auf, dass insbesondere den Lenkradkranz im Querschnitt umgreifen kann, wobei jenes hülsenförmige Element insbesondere dazu eingerichtet und vorgesehen ist, beim Verschwenken der mindestens einen Speiche am Lenkradkranz entlang zu gleiten. Dies kann mit einer Veränderung der Form des Lenkradkranzes einhergehen, etwa indem jenes hülsenförmige Element ein Segment des Lenkradkranzes (oder mehrere Segmente) in eine neue, veränderte Position gegenüber den übrigen Segmenten des Lenkradkranzes drückt (hierbei kann es sich um eine Zwangsbewegung handeln).

Vorzugsweise ist also die Form des Lenkradkranzes durch Verstellen der Speiche veränderbar. Unter der Form wird dabei insbesondere die entlang der Umfangsrichtung verlaufende Kontur des Lenkradkranzes verstanden. So kann der Lenkradkranz beispielsweise abschnittsweise kreissegmentförmig verlaufen. Diese Kreisform kann durch Verstellen der mindestens einen Speiche (oder mehrere Speichen) beispielsweise abgeflacht werden.

Des Weiteren ist in einer Variante der Erfindung der Umfang des Lenkradkranzes durch Verstellen der Speiche veränderbar ausgebildet. So kann zum Beispiel durch Verkürzen der mindestens einen Speiche (oder mehrerer vorhandener Speichen) entlang ihrer Erstreckungsrichtung der Umfang des Lenkradkranzes durch Verkleinern des Radius des Lenkradkranzes verkleinert werden. Das Verkleinern des Radius wird dabei durch Verkürzen der mindestens einen Speiche bewerkstelligt.

In einer Variante der Erfindung besteht der Lenkradkranz aus einer Mehrzahl miteinander beweglich verbundener Segmente, was das Verändern der Form und oder des Umfangs des Lenkradkranzes erleichtert. So können die Segmente beispielsweise aneinander angelenkt sein und/oder aufeinander gleiten bzw. verschieblich aneinander befestigt sein, so dass der Lenkradkranz beispielsweise durch ein oben beschriebenes Verstellen der mindestens einen Speiche in eine neue, gewünschte Form gedrückt/bewegt werden kann.

Weitere Vorteile und Merkmale der Erfindung sollen anhand der nachfolgenden Figurenbeschreibungen von Ausführungsbeispielen verdeutlicht werden. Es zeigen:
- Fig. 1A:: eine schematische Draufsicht auf ein erfindungsgemäßes Lenkrad mit vier verstellbaren Speichen;
- Fig. 1 B:: das Lenkrad gemäß Figur 1A in einer schematischen, perspektivischen Ansicht;
- Fig. 2A:: eine schematische Draufsicht auf das in den Figuren 1A und 1B gezeigte Lenkrad, wobei die Speichen bezüglich der vertikalen Fahrzeugachse jeweils nach unten verschwenkt wurden;
- Fig. 2B:: das Lenkrad gemäß Fig. 2A in einer schematischen, perspektivischen Ansicht;
- Fig. 3A:: eine schematische Draufsicht auf das Lenkrad gemäß Figuren 1A bis 2B, bei dem die Speichen durch Verstellen verkürzt sind, um den Durchmesser des Lenkradkranzes des Lenkrades zu verkleinern;
- Fig. 3B:: das Lenkrad gemäß Figur 3A in einer schematischen, perspektivischen Ansicht;
- Fig. 4A: eine schematische Draufsicht auf ein weiteres erfindungsgemäßes Lenkrad, mit vier verstellbaren Speichen;
- Fig. 4B: das in der Figur 4A gezeigte Lenkrad in einer schematischen, perspektivischen Ansicht;
- Fig. 5A:: ein schematische Draufsicht auf das in den Figuren 4A und 4B gezeigte Lenkrad, wobei die zwei unteren Speichen bezüglich der vertikalen Fahrzeugachse jeweils nach unten verschwenkt wurden, wodurch der untere abgeflachte Lenkradkranz eine Rundung erhält;
- Fig. 5B:: das Lenkrad gemäß Fig. 5A in einer schematischen perspektivischen Ansicht;
- Fig. 6A:: eine schematische Draufsicht auf das Lenkrad gemäß Figuren 4A bis 5B, bei dem die Speichen durch Verstellen verkürzt sind, um den Durchmesser des Lenkradkranzes des Lenkrades zu verkleinern; und
- Fig. 6B:: das Lenkrad gemäß Figur 6A in einer schematischen, perspektivischen Ansicht.

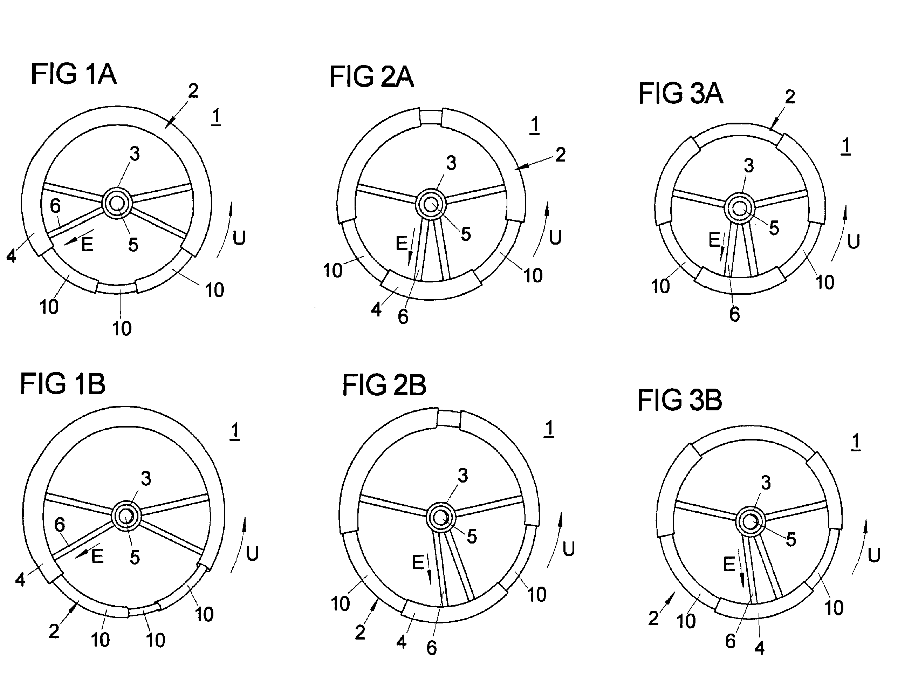

Figur 1A zeigt im Zusammenhang mit den Figuren 1B bis 3B ein Lenkrad 1 für ein Kraftfahrzeug, mit einem Nabenkörper 3, über den das Lenkrad 1 um eine Lenkachse 5 drehbar an einem Kraftfahrzeug lagerbar ist. Das Lenkrad 1 weist einen in einer Umfangsrichtung U umlaufenden Lenkradkranz 2 auf, der insbesondere senkrecht zur Lenkachse 5 entlang einer Umfangsrichtung U umläuft. Hierbei ist der Lenkradkranz 2 insbesondere kreisförmig ausgebildet.

Das Lenkrad 1 weist ferner vier Speichen 6 auf, über die der Nabenkörper 3 mit dem Lenkradkranz 2 verbunden ist. Hierbei gehen die Speichen 6 jeweils vom Nabenkörper 3 ab und münden jeweils in den Lenkradkranz 2 ein. Die Speichen 6 sind jeweils entlang einer Erstreckungsrichtung E längs erstreckt ausgebildet. Die Speichen 6 werden im Uhrzeigersinn als erste, zweite, dritte und vierte Speiche 6 bezeichnet. Es können natürlich auch mehr als vier Speichen 6 oder weniger als vier Speichen 6 vorgesehen sein.

Die Speichen 6 sind jeweils verschwenkbar am Nabenkörper 3 gelagert, insbesondere um die Lenkachse 5, so dass sie bezüglich des (als ruhend angenommenen) Lenkradkranzes 2 verstellbar sind. Hierzu sind die Speichen 6 jeweils an dem in den Lenkradkranz 2 einmündenden Bereich 4 bzw. an dem mit dem Lenkradkranz 2 verbundenen Bereich 4 so ausgebildet, dass sie am Lenkradkranz 2 entlang bewegt bzw. verschwenkt werden können. Hierbei können die Speichen 6 den Lenkradkranz 2 zumindest abschnittsweise im Querschnitt umgreifen, beispielsweise indem die einzelnen Speichen 6 jeweils in ein hülsenförmiges Element 4 münden, das jeweils einen Abschnitt des Lenkradkranzes 2 umgreift bzw. ein in der Umfangsrichtung U bewegliches Teil des Lenkradkranzes 2 darstellt. Ein solches Element 4 muss natürlich nicht in sich geschlossene umlaufen, sondern kann im Querschnitt auch offen ringförmig ausgebildet sein.

Diese Verstellbarkeit der Speichen 6 hat zur Folge, dass die Speichenstellungen an die individuellen Bedürfnisse eines Fahrers angepasst werden können (im Folgenden wird die Stellung der Speichen 6 jeweils analog zur Stellung eines Zeigers einer Uhr angegeben).

In Figur 1A sind die vier Speichen 6, die insbesondere jeweils linear längs erstreckt verlaufen, jeweils nahe der Horizontalen angeordnet (bei einem Lenkrad 1 in Geradeausfahrtstellung), wobei die erste Speiche 6 eine leichte Neigung gegenüber der Horizontalen aufweist und in etwa in der 2:30 Uhr-Stellung angeordnet ist. Die zweite Speiche 6 weist eine ausgeprägtere Neigung zur Horizontalen auf und befindet sich etwa in 4:00 Uhr-Stellung. Die dritte und vierte Speiche 6 weisen eine spiegelsymmetrische Anordnung hierzu auf, d.h., die dritte Speiche 6 befindet sich in der 8:00 Uhr-Position, die vierte Speiche 6 etwa in der 9:30 Uhr-Stellung. Die Speichen 6 münden jeweils in ein hülsenförmiges Element 4, das jeweils in der Umfangsrichtung U am Lenkradkranz 2 entlang verschoben werden kann, wie der Figur 2A bzw. 2B entnommen werden kann. Diese Figuren zeigen nämlich das Lenkrad 1 gemäß Figuren1A und 1B mit verschwenkten Speichen 6. Hierbei wurden die erste und zweite Speiche 6 im Uhrzeigersinn verschwenkt, die dritte und vierte Speiche 6 hingegen gegen den Uhrzeigersein, so dass nunmehr die erste und vierte Speiche 6 nahe der Horizontalen verlaufen und die zweite und dritte Speiche 6 annähernd parallel zueinander verlaufen und jeweils nahe der 6 Uhr-Stellung angeordnet sind.

Das Verschwenken kann ggf. durch den Fahrer vorgenommen werden oder kann auf Veranlassung des Fahrers motorisch bewerkstelligt werden. Natürlich kann das Verschwenken der Speichen 6 auch werkseitig vorgenommen werden, wobei die Speichen 6 so fixiert werden können, dass sie durch den Benutzer (Fahrer) nicht mehr händisch verstellt werden können.

Des Weiteren besteht die Möglichkeit, dass die Speichen 6 gemäß Figuren 3A und 3B entlang ihrer jeweiligen Erstreckungsrichtung E verkürzt oder verlängert werden können, um den Durchmesser (oder ggf. die Kontur) des Lenkradkranzes zu verkleinern bzw. zu vergrößern. Hierzu ist der Lenkradkranz 2 aus Segmenten 10 aufgebaut, die ineinander schiebbar sind bzw. die auseinander gezogen werden können, um den Durchmesser bzw. Umfang des Lenkradkranzes entlang der Umfangsrichtung U zu verkleinern oder zu vergrößern.

Das Verschieben solcher Segmente 10 gegeneinander kann als Zwangsbewegung dargestellt werden, die durch das Verschwenken der Speichen 6 initiiert wird.

Dabei kann durch ein Verstellen der Speichen 6 (Verschwenken und / oder Verkürzen bzw. Verlängern) auch die Kontur des Lenkradkranzes 2, also dessen Gestalt verändert werden.

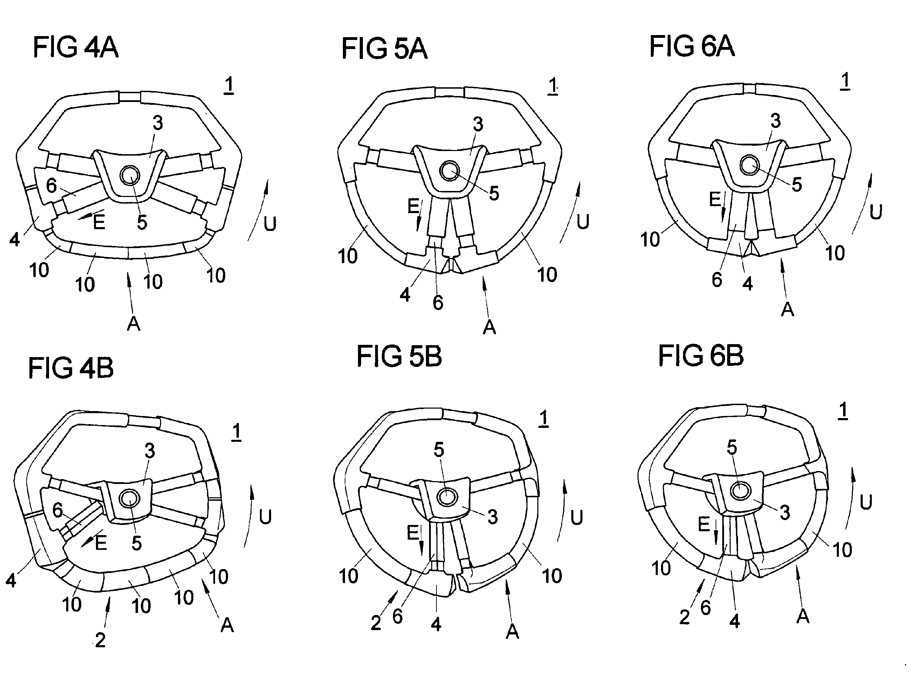

So zeigt die Figur 4A im Zusammenhang mit den Figuren 4B bis 6B ein Lenkrad 1 mit vier Speichen 6, die entsprechend Figur 1A als erste, zweite, dritte und vierte Speiche 6 bezeichnet werden. Dabei entspricht die Speichenstellung gemäß Figur 3A der Speichenstellung gemäß Figur 1A. Die Speichen 4 sind wie im ersten Ausführungsbeispiel schwenkbar am Nabenkörper 3 gelagert, wobei jedoch insbesondere die erste und vierte Speiche 6 starr am Lenkradkranz 2 festgelegt sein können.

Wie in Figur 5A bzw. 5B gezeigt, können bei diesem Ausführungsbeispiel insbesondere die zweite und dritte Speiche 6 aus der in den Figuren 4A und 4B gezeigten Positionen in Richtung auf die 6:00 Uhr-Stellung geschwenkt werden (aufeinander zu), wobei die hülsenförmigen Elemente 4 jener Speichen 6 einen (bezogen auf die vertikale Fahrzeugachse) unteren Abschnitt A eines in Geradeausfahrtstellung befindlichen Lenkradkranzes 2, der bei der Anfangsstellung der zweiten und dritten Speiche 6 gemäß Figur 4A und 4B im Wesentlichen längs erstreckt entlang der Horizontalen verläuft, zu einem Abschnitt A mit rundlicher Krümmung verformen. Dies liegt daran, dass der Lenkradkranz 2 aus Segmenten 10 ausgebildet ist bzw. Segmente 10 aufweist, die gegeneinander verdreht werden können, d.h., in Querschnittsebenen des Lenkradkranzes 2, die jeweils senkrecht zur Umfangsrichtung U erstreckt sind, wobei ggf. einzelnen Segmente 10 auch ineinander schiebbar sind bzw. auseinander gezogen werden können. Diese Bewegungen der einzelnen Segmente 10 des Lenkradkranzes 2, die beispielsweise eine Transformation des Lenkradkranzes 2 von der annähernd rechteckförmigen bzw. sechseckförmigen Kontur gemäß Figur 4A hin zur halbrunden Kontur gemäß Figur 5A bedingen, sind Zwangsbewegungen, die durch die Form der hülsenförmigen Elemente 4 sowie den jeweiligen Schwenkwinkel der zweiten bzw. dritten Speiche 6 vorgegeben sind.

Schließlich können bei dem zweiten Ausführungsbeispiel noch die Speichen 6 verkürzt werden, um den Umfang des Lenkradkranzes 2 insgesamt zu verkleinern, wobei hierbei insbesondere die beiden Elemente 4, in die die erste bzw. vierte Speiche 6 einmünden entlang der Horizontalen bzw. entlang der Erstreckungsrichtungen E jener Speichen 6, die (annähernd) parallel ausgerichtet sind, einander angenähert werden. Hierbei können die Segmente 10 des besagten unteren Abschnittes A des Lenkradkranzes 2 ggf. abschnittsweise in die unteren hülsenförmigen Elemente 4 der zweiten und dritten Speiche 6 hinein gleiten. Alternativ oder ergänzend können jene Segmente 10 auch in die oberen Elemente 4, in die die erste und vierte Speiche 6 einmünden hinein gleiten, so dass sich der Umfang des Lenkradkranzes 2 insgesamt verkleinern kann.

## Patentansprüche

1. Lenkrad für ein Kraftfahrzeug, mit
- einem Lenkradkranz (2),
- einem Nabenkörper (3), über den das Lenkrad um eine Lenkachse (5) drehbar an einem Kraftfahrzeug lagerbar ist,
- zumindest einer Speiche (6), über die der Nabenkörper (3) mit dem Lenkradkranz (2) verbunden ist,
wobei
die mindestens eine Speiche (6) bezüglich des Lenkradkranzes (2) verstellbar ausgebildet ist, **dadurch gekennzeichnet,**
**dass** die mindestens eine Speiche (6) um die Lenkachse (5) bezüglich des Lenkradkranzes (2) verschwenkbar ist, wobei die mindestens eine Speiche (6) einen in den Lenkradkranz einmündenden oder mit dem Lenkradkranz verbundenen Bereich aufweist, der am Lenkradkranz entlang bewegt werden kann, und wobei die mindestens eine Speiche (6) schwenkbar am Nabenkörper (3) gelagert ist.

2. Lenkrad nach Anspruch 1, **dadurch gekennzeichnet, dass** die mindestens eine Speiche (6) entlang einer Erstreckungsrichtung (E), entlang der sich die Speiche (6) erstreckt, verstellbar ausgebildet ist, so dass die Länge der Speiche (6) entlang der Erstreckungsrichtung (E) variabel ist.

3. Lenkrad nach einem der vorhergehenden Ansprüche, **dadurch gekennzeichnet, dass** die mindestens eine Speiche (6) als Teleskopspeiche ausgebildet ist.

4. Lenkrad nach einem der vorhergehenden Ansprüche, **dadurch gekennzeichnet, dass** die Speiche (6) in ein hülsenförmiges Element (4) mündet.

5. Lenkrad nach Anspruch 4, **dadurch gekennzeichnet, dass** jenes hülsenförmige Element (4) den Lenkradkranz umgreift.

6. Lenkrad nach Anspruch 4 oder 5, **dadurch gekennzeichnet, dass** das hülsenförmige Element (4) dazu ausgebildet ist, beim Verschwenken der mindestens einen Speiche (6) am Lenkradkranz (2) entlang zu gleiten.

7. Lenkrad nach einem der vorhergehenden Ansprüche, **dadurch gekennzeichnet, dass** die Form des Lenkradkranzes (2) durch Verstellen der mindestens einen Speiche (6) veränderbar ist.

8. Lenkrad nach einem der vorhergehenden Ansprüche, **dadurch gekennzeichnet, dass** der Umfang des Lenkradkranzes (2) durch Verstellen der mindestens einen Speiche (6) veränderbar ist.

9. Lenkrad nach einem der vorhergehenden Ansprüche, **dadurch gekennzeichnet, dass** der Lenkradkranz (2) eine Mehrzahl beweglich miteinander verbundener Segmente (10) aufweist.

10. Lenkrad nach einem der vorhergehenden Ansprüche, **gekennzeichnet durch** eine Mehrzahl verstellbarer Speichen (6).

## Claims

1. Steering wheel for a motor vehicle, having
- a steering wheel rim (2),
- a hub body (3), via which the steering wheel can be mounted rotarily around a steering axle (5) on a motor vehicle,
- at least one spoke (6), via which the hub body (3) is connected to the steering wheel rim (2),
wherein the at least one spoke (6) is designed to be adjustable with respect to the steering wheel rim (2),
**characterized**
**in that** the at least one spoke (6) can be pivoted around the steering axle (5) with respect to the steering wheel rim (2), wherein the at least one spoke (6) comprises an area leading into the steering wheel rim or connected to the steering wheel rim which can be moved along the steering wheel rim, and wherein the at least one spoke (6) is mounted pivotably on the hub body (3)

2. Steering wheel according to claim 1, **characterized in that** the at least one spoke (6) is designed to be adjustable along a direction of extension (E), along which the spoke (6) extends, such that the length of the spoke (6) is variable along the direction of extension (E).

3. Steering wheel according to any of the preceding claims, **characterized in that** the at least one spoke (6) is designed as telescopic spoke.

4. Steering wheel according to any of the preceding claims, **characterized in that** the spoke (6) leads to a sleeve-shaped element (4).

5. Steering wheel according to Claim 4, **characterized in that** said sleeve-shaped element (4) encompasses the steering wheel rim.

6. Steering wheel according to Claim 4 or 5, **characterized in that** the sleeve-shaped element (4) is designed to slide along the steering wheel rim (2) upon pivoting the at least on spoke (6).

7. Steering wheel according to any of the preceding claims, **characterized in that** the shape of the steering wheel rim (2) can be changed by adjusting the at least one spoke (6).

8. Steering wheel according to any of the preceding claims, **characterized in that** the circumference of the steering wheel rim (2) can be changed by adjusting the at least one spoke (6).

9. Steering wheel according to any of the preceding claims, **characterized in that** the steering wheel rim (2) has a plurality of segments (10) movably connected to each other.

10. Steering wheel according to any of the preceding claims, **characterized by** a plurality of adjustable spokes (6).

## Revendications

1. Volant pour véhicule automobile avec
- une couronne de volant (2),
- un corps de moyeu (3) à l'aide duquel le volant peut être logé de manière rotative autour d'un axe de direction (5) dans un véhicule automobile,
- au moins un rayon (6) à l'aide duquel le corps de moyeu (3) est relié à la couronne du volant (2), dans lequel quoi le rayon (6) est conçu de manière réglable par rapport à la couronne du volant (2), **caractérisé en ce que** l'au moins un rayon (6) peut pivoter autour de l'axe de direction (5) par rapport à la couronne du volant (2), dans lequel l'au moins un rayon (6) comprend une zone débouchant dans la couronne du volant ou reliée avec la couronne du volant, zone, qui peut être déplacée le long de la couronne du volant et dans lequel l'au moins un rayon (6) est logé de manière pivotante sur le corps de moyeu (3).

2. Volant selon la revendication 1, **caractérisé en ce que** l'au moins un rayon (6) est conçu de manière réglable le long d'une direction d'extension (E), le long de laquelle le rayon (6) s'étend, de façon à ce que la longueur du rayon (6) soit variable le long de la direction d'extension (E).

3. Volant selon l'une quelconque des revendications précédentes, **caractérisé en ce que** l'au moins un rayon (6) est conçu comme un rayon télescopique.

4. Volant selon l'une quelconque des revendications précédentes, **caractérisé en ce que** le rayon (6) débouche dans un élément en forme de gaine (4).

5. Volant selon la revendication 4, **caractérisé en ce que** cet élément en forme de gaine (4) entoure la couronne du volant.

6. Volant selon la revendication 4 ou 5, **caractérisé en ce que** l'élément en forme de gaine (4) est conçu de façon à glisser le long de la couronne du volant (2) lors du pivotement de l'au moins un rayon (6).

7. Volant selon l'une quelconque des revendications précédentes, **caractérisé en ce que** la forme de la couronne du volant (2) peut être modifiée en déplaçant le rayon (6).

8. Volant selon l'une quelconque des revendications précédentes, **caractérisé en ce que** la circonférence de la couronne du volant (2) peut être modifiée en déplaçant le rayon (6).

9. Volant selon l'une quelconque des revendications précédentes, **caractérisé en ce que** la couronne du volant (2) présente une pluralité de segments (10) reliés entre eux de manière mobile.

10. Volant selon l'une quelconque des revendications précédentes, **caractérisé par** une pluralité de rayons (6) mobiles.
